# EUROPEAN PATENT SPECIFICATION

(11) **EP 3 559 139 B1**
(45) Date of publication and mention of the grant of the patent: **07.04.2021**
(21) Application number: 17835700.0
(22) Date of filing: 22.12.2017
(51) Int. Cl.: C09J 7/40, B32B 7/06

(54) **ADHESIVE ASSEMBLY AND METHOD OF AFFIXING AN ADHESIVE**
KLEBSTOFFANORDNUNG UND VERFAHREN ZUM BEFESTIGEN EINES KLEBSTOFFS
ENSEMBLE ADHÉSIF ET PROCÉDÉ DE FIXATION D'UN ADHÉSIF

(30) Priority: 23.12.2016 GB 201622208
(43) Date of publication of application: 30.10.2019
(73) Proprietor: LINEAR SHAPED LIMITED, Hartlepool TS24 7DN (GB)
(72) Inventor: LUMLEY, Andrew, Alston, Cumbria CA9 3JD (GB)
(74) Representative: EIP
(86) International application number: PCT/GB2017/053891
(87) International publication number: WO 2018/115908

(56) References cited:
- EP-A1- 0 862 992
- EP-A1- 1 595 928
- GB-A- 2 239 854

## Description

### Background

Adhesives may be used to affix objects together. For example, it is often desirable to affix a charge, such as a linear shaped charge, to a structure for breaching the structure by detonating the charge. Such adhesives are susceptible to deterioration when stored for prolonged periods of time and subjected to certain conditions. EP0862992 relates to a packaging material and GB2239854 to a film-packaged article.

It is desirable to improve a usable lifetime of an adhesive.

### Brief Description of the Drawings

Figure 1a shows schematically a cross-sectional view of an assembly according to examples.
Figure 1b shows schematically a cross-sectional view of an assembly according to a different examples.
Figure 2 shows schematically a view of an apparatus according to examples.
Figure 3 shows schematically a view of a charge with part of an assembly according to examples.
Figure 4 shows schematically a cross-sectional view of an assembly according to further examples.

### Detailed Description

Explosive charges are often used for breaching structures, such as a wall, for people to pass through. Adhesives may be used for applying explosive charges, for example contact charges, explosively formed penetrator (EFP) charges, or shaped charges such as conical or linear shaped charges, to such structures.

In order for an adhesive to be practical for applying charges to structures for breaching, the adhesive may comprise particular properties depending on the situation in which the adhesive is being used. For example, adhesives that are one or more of: resistant to high or low temperatures, electrically conductive, isotropic, hypoallergenic, may be selected for applying a charge to a structure for breaching the structure. Hydrogels may be a preferred adhesive in certain cases due to its ability to adhere to mixed surfaces, in other words surfaces with congruent partial surfaces of different materials. A mixed surface may be a surface that has partial surfaces that are dry and wet and/or rough and smooth and/or an undulating surface, for example. Such mixed surfaces may be common in the field, and so a hydrogel may be particularly useful for affixing a charge to such a surface, e.g. for breaching the surface. Thus, a hydrogel may be suitable due to its high initial tack, cohesive strength and/or adhesive strength properties.

It has been realised that some adhesives are susceptible to certain climatic conditions. For example, adhesives comprising a hydrogel are susceptible to the presence of water and will deteriorate, either in effectiveness as an adhesive or in physical structural integrity, when subjected to water molecules. The adhesive being subjected to water molecules may occur, for example, due to a relatively high atmospheric humidity where water molecules suspended in the air surround the hydrogel adhesive. As another example, adhesives comprising an acrylic material are susceptible to variation in temperature, for example as the temperature is increased above a certain point, the acrylic material becomes less adhesive. In other examples, an adhesive, such as a rubber based adhesive, may be susceptible to deteriorate when exposed to ultraviolet (UV) radiation.

The invention is an assembly according to claim 1 and a method according to claim 14. Examples of assemblies comprising an adhesive between layered structures are described, wherein the assembly may allow for the adhesive to be sufficiently sealed from climatic conditions of the region around the assembly such that the adhesive may be sufficiently effective as an adhesive and/or structurally for a longer period of time compared to if the adhesive were subjected to the climatic conditions without the assembly. For example, the layered structures that the adhesive is between may sufficiently seal the adhesive from water molecules passing from an external atmosphere outside the assembly to an internal atmosphere within the assembly where the adhesive lies. Thus, the assembly may provide climatic resilience to relatively high humidity, and allow the adhesive to be usable for a longer time or, in other words, have a longer lifetime. The seal may be considered a "quasi-seal" in that it is relatively weaker compared to heat or pressure seals, for example, and may be more easily overcome to separate the layered structures, for example so a layered structure is readily removable by a user. Also, for the layered structures to be sealed in this way does not require the presence of another element, for example a sealing element made from a sealant such as rubber. This allows for the assembly to be lighter in weight compared to assemblies that employ such an extra sealing element.

Certain features described herein may be referenced in numerical nomenclature, for example "a second layered structure comprises a third portion". This labelling nomenclature does not necessarily mean, however, that the second layered structure referred to here also has first and second portions. Rather, the numerical labelling is used to make referencing clearer for the reader by avoiding references to numerous "first portions", for example.

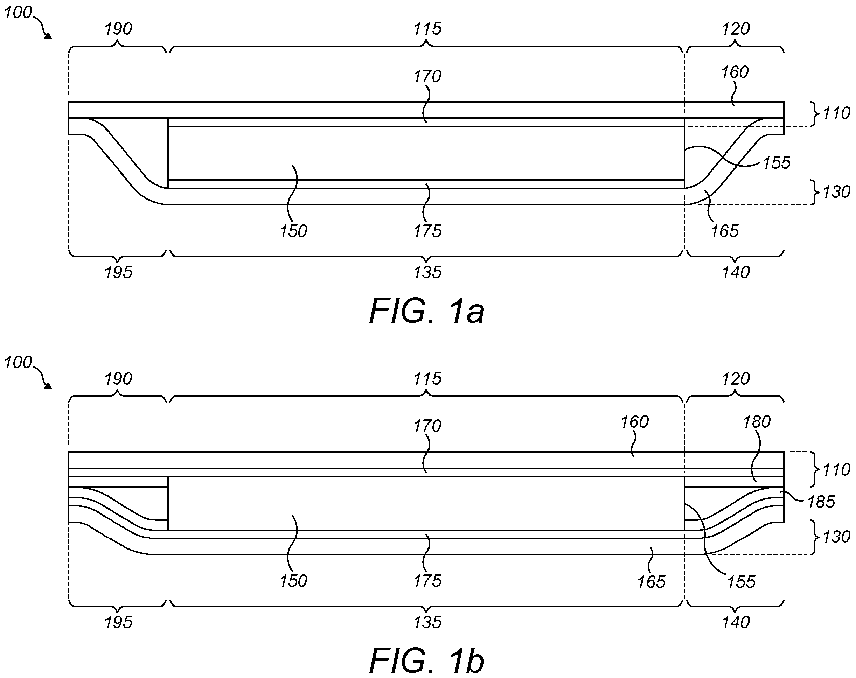

Examples of assemblies and features thereof will now be described in detail, with some particular examples being described with reference to Figures 1a and 1b. It is to be appreciated that examples described with specific features are not necessarily limited to those examples, but as the skilled person will understand are applicable to further examples, for example in accordance with the accompanying claims. Therefore, generally, examples described herein are of an assembly with a first layered structure having a first and second portion, and a second layered structure having a third and fourth portion. The second portion comprises a first material and the fourth portion comprises a second material. There is an adhesive between the first and third portions. The second and fourth portions each overhang an edge of the adhesive and are configurable to a sealed configuration with the second and fourth portions in contact with each other, and held in such contact by an attractive force between the first material and the second material.

The adhesive is for example any material having adhesive properties. In some examples the adhesive is adhesive to, when placed in contact (for example under applied pressure) with, materials other than itself. In other examples, the material may not be adhesive to materials other than itself, but is adhesive when placed in contact (for example under applied pressure) with itself or with another structure of the same material. In such other examples, the adhesive may be a so-called self-amalgamating material which may be non-tacky but may nonetheless adhere to itself or another structure or element of the same material, for example when stretched or with applied pressure. In this way, the material can amalgamate or unite with itself. Such a self-amalgamating material is for example silicone rubber tape, for example supplied by 3M, with product name Scotch 23 Linered Premium Rubber Tape. In further examples, instead of using an adhesive, there may be used a non-adhesive material with at least one of the first and second layered structure having an adhesive material for adhering to a surface of the non-adhesive material.

Figures 1a and 1b each show different examples of an assembly 100 in cross section, wherein a longitudinal axis of the assembly 100 extends in a direction perpendicular to the page. The assembly 100 comprises a first layered structure 110 and a second layered structure 130. The first layered structure 110 has a first portion 115 and a second portion 120. The second portion 120 comprises, for example is made from, a first material. The second layered structure 130 has a third portion 135 and a fourth portion 140. The fourth portion 140 comprises, for example is made from, a second material. There is an attractive force between the first material and the second material. An adhesive 150 is between the first portion 115 and the third portion 135. The second portion 120 and the fourth portion 140 each overhang an edge 155 of the adhesive 150 and are configurable to a sealed configuration. In the sealed configuration, the second portion 120 and the fourth portion 140 are held in contact with each other by the attractive force.

The edge 155 of the adhesive 150 may be considered to correspond to the boundary between the first portion 115 and the second portion 120 of the first layered structure 110, and the boundary between the third portion 135 and the fourth portion 140 of the second layered structure 130.

In examples, the attractive force is an electrostatic attractive force. For example, the attractive force may be resultant from triboelectric charging between the first material and the second material, that is to say attraction between the first and second materials may be via the triboelectric effect, where the first and second materials may be separated in the triboelectric series known to the skilled person. In some examples, the first material has a first charge affinity value and the second material has a second charge affinity value. Charge affinity values may be considered to be a way of relating different materials' affinity for charge, or electrons. The concept may be considered as related to electron affinity of atoms or molecules, as charge is carried by electrons. For example, a material with a charge affinity value of zero nanocoulombs per Joule (nC/J) may experience substantially no transfer of charge (for example less than one nanocoulomb of charge) to or from the material. However, a first material with a more negative charge affinity than a second material will attract electrons from the second material when the two materials contact, and so the first material will become more negatively charged after contacting the second material (which will become more positively charged). A difference in charge affinity values between two materials may be considered as the static charge per unit energy that results from the two materials contacting each other, for example being rubbed against each other. The second charge affinity value may be different from the first charge affinity value by at least 20 nC/J, 30 nC/J, 40 nC/J or 50 nC/J in certain examples. Thus, in these examples, the electrostatic attractive force may be due to the difference in charge affinity between the first and second materials. The attractive force between the first and second materials to provide a sealing function, for providing a barrier between the adhesive 150 and climatic conditions exterior to the assembly 100, may be far less susceptible to deterioration compared to the use of an additional sealing element. For example, the second portion 120 and the fourth portion 140 may be in the sealed configuration for a longer time than a sealing element would last before deteriorating such that the seal is no longer sufficient for shielding the adhesive 150 from climatic conditions such as a relatively high humidity.

In such a sealed configuration, the second portion and the fourth portion may contact each other substantially along a length of the assembly, the length taken in a direction parallel the longitudinal axis referred to above. By saying substantially along, it is envisaged that the second portion contacts the fourth portion along for example 50% or more of the length of the assembly. The greater the length of the assembly where the second portion contacts the fourth portion, the longer the length of seal against climatic conditions is provided. Thus, in some examples, the second and fourth portions contact each other, in the sealed configuration, along substantially the entire length of the assembly, for example 95% or more of the length of the assembly. A continuous seal may therefore exist substantially along the length of the assembly, for example as a strip or band of contact between the second and fourth portions.

It is to be noted that the extent of the seal, and therefore the strength of the seal and/or the effectiveness of its sealing function, may depend on the surface area of the second portion in contact with the fourth portion. Such a surface area will depend for example on the width of the second and/or fourth portions, and/or the strength of the attractive force.

The assembly 100 therefore exhibits climatic resilience, for example may be resilient to particular climatic conditions such that the adhesive 150 as part of the assembly is still functional and effective as an adhesive. In examples, the assembly 100 may be resilient to a temperature range of -56 to +72 degrees Celsius, that is to say performance of the assembly is satisfactory within this temperature range.

In Figures 1a and 1b, dimensions of the layered structures 110, 130 and the adhesive 150 represented in the cross-sections are widths and thicknesses. The longitudinal axis of the assembly 100 extends perpendicular to the page, whereas widths extend horizontally in the plane of the cross-section, and thicknesses extend vertically in the plane of the cross-section as shown.

In some examples, a width of the second portion 120 is greater than or equal to a thickness of the adhesive at the edge 155 of the adhesive 150. The width of the second portion is taken perpendicularly to the edge 155 of the adhesive 150 in these examples.

In some examples of the assembly 100, the first layered structure 110 has a first layer 160 comprising the first material, as shown in Figure 1a. The second portion 120 may at least partly comprise the first layer 160. The first layer 160 may, in certain cases, substantially completely comprise the first material, for example comprise at least ninety five percent by mass of the first material (95 wt%).

In some examples, the second layered structure 130 of the assembly 100 has a second layer 165 comprising the second material, as shown in Figure 1a. The fourth portion 140 may at least partly comprise the second layer 165. The second layer 165 may, in certain cases, substantially completely comprise the second material, for example comprise at least ninety five percent by mass of the second material (95 wt%)..

In the example shown in Figure 1a, the first portion 115 comprises the first layer 160. In other examples, the first portion 115 may partly comprise the first layer 160, in other words the first portion 115 may comprise only part of the first layer 160. Similarly, in the same example shown in Figure 1a, the third portion 135 comprises the second layer 165. In other examples, the third portion 135 may partly comprise the second layer 165, in other words the third portion 135 may comprise only part of the second layer 165.
The first portion 115 comprises a third layer 170 in contact with the adhesive 150 in the examples of Figure 1a and Figure 1b. The third layer 170 may comprise a first release agent. A release agent may be considered to be a particular type of substance with properties for preventing materials from bonding, for example for preventing the adhesive 150 from adhering to other materials, such as the first layer 160 in the example of Figure 1a. Release agents may, in some instances, be applied to a material as a coating or as a film placed on the material. In examples, the third layer 170 is in contact with the first layer 160. Such a release agent, for example already applied to a first layer or a second layer, is available for example from the PRIMELINER™ range of products with direct silicone coated polyethylene (PE), polypropylene (PP), polyester (PET), and polystyrene (PS) films, supplied by LOPAREX International B.V., Laan van Westenenk 45, 7336 AZ Apeldoorn, The Netherlands.

In some examples, such as those shown in Figure 1a and Figure 1b, the third portion 135 comprises a fourth layer 175 in contact with the adhesive 150, the fourth layer 175 comprising a second release agent. In some examples the first release agent may be the same as the second release agent, and in other examples, the first and second release agents may be different. Either, or both, of the first release agent and the second release agent may be configured to be releasable from, yet sufficiently adhering to, the adhesive. For example, the first release agent and the second release agent may each have a respective surface energy density value so that the first layered structure and the second layered structure are each releasable from the adhesive by a human user, but sufficiently adhering to the adhesive before releasing by the user. One or both of the first release agent and the second release agent may comprise at least one of silicone or polyethylene. In examples, the fourth layer 175 is in contact with the second layer 165. Such a layer comprising a release agent is available, for example already applied as a coating

In certain cases, the third layer 170 is substantially absent from the second portion 120, as shown in Figure 1a. Similarly, in particular examples, the fourth layer 175 is substantially absent from the fourth portion 140, also shown in the example of Figure 1a. The absence of the third layer 170 and/or the fourth layer 175 from the second portion 120 and/or the fourth portion 140, respectively, may allow for a stronger attractive force between the first material and the second material, and thus the sealed configuration of the second portion 120 and the fourth portion 140 may be more impervious or impermeable, for example to atmospheric humidity (such as water molecules in an atmosphere about the assembly 100).

In examples of the assembly 100, the first portion 115 and the second portion 120 together comprise a first layer 160, as shown in Figure 1b. The second portion 120 also at least partly comprises a fifth layer 180 formed from the first material in this example. Furthermore, in some examples, the third portion 135 and the fourth portion 140 together comprise a second layer 165, with the fourth portion 140 at least partly comprising a sixth layer 185 formed from the second material. The fifth layer 180 and/or the sixth layer 185 may substantially completely comprise the first material and the second material, respectively, in certain cases.

The fifth layer 180 may be substantially absent from, for example within acceptable manufacturing tolerances, the first portion 115. The sixth layer 185 may additionally or alternatively be substantially absent (again for example within acceptable manufacturing tolerances) from the third portion 135.

In some examples only part of the second portion 120 comprises the fifth layer 180, and/or only part of the fourth portion 140 comprises the sixth layer 185. Thus, the fifth layer 180 may be considered a modification to the first layered structure 110 having the first layer 160 of some material, for example a polymer material, and the third layer 170 comprising the first release agent. Similarly, the sixth layer 185 may be considered a modification to the second layered structure 130 having the second layer 165 and the fourth layer 175 comprising the second release agent. These modifications may be made to allow for the attractive force between the first material and the second material to hold the second portion 120, of the first layered structure 110, and the fourth portion 140, of the second layered structure 130, in contact with each other in the sealed configuration.

In some examples, the fourth portion 140 of the second layered structure 130 is more flexible than the second portion 120 of the first layered structure 110. This may allow for at least part of the second layered structure 130 to be removed easily from the assembly 100, for example since the fourth portion 140 may be rubbed against, or lifted away from, the second portion 120 to overcome the attractive force holding the two portions 120, 140 together.

The second portion 120 may provide structural support through its relative stiffness, for example in particular cases where the assembly 100 is rolled along its length and placed on its side, for example with an axis that the assembly 100 has been rolled about being substantially perpendicular to, for example at an angle between eighty and one hundred degrees to, a surface upon which the assembly 100 rests. In these particular cases, the relative stiffness of the second portion 120 may allow the assembly 100 to rest on its side as described, without the overhanging second portion 120 and fourth portion 140 being crumpled, and/or without the adhesive 150 wrinkling. The second portion 120 may have, in particular examples, a flexural modulus value larger than a flexural modulus value of the fourth portion. In some cases, the entire first layered structure 110 may have a flexural modulus greater than that of the second layered structure, for providing structural stiffness and/or support to the assembly 100. The relative stiffness of the second portion 120 may also allow for the fourth portion 140 to be separated from the second portion 120 more easily. For example, the fourth portion 140 may be rubbed against, or lifted away from, the stiffer second portion 120 by a user's fingers to overcome the attractive force holding the two portions 120, 140 together.

Figures 1a and 1b each illustrate the first layered structure in a planar configuration, without the second portion being bent towards the fourth portion. Despite this stiffness of the second portion, the first layered structure may be sufficiently flexible to be rollable in accordance with examples described herein. In other examples the second portion may be flexible so as to bend towards and contact the fourth portion in response to the attractive force.

The first material described herein may be formed from a first polymer material, for example a polyester. The second material described herein may additionally or alternatively be formed from a second polymer material, for example a polyethylene. In the example where the first material comprises a polyester, such as polyethylene terephthalate (PET) and the second material comprises a polyethylene (PE), the magnitude of the difference between the first and second charge affinity values may be 50 nC/J. For example, the polyester may have charge affinity value of approximately -40 nC/J and the polyethylene may have a charge affinity value of approximately -90 nC/J. The polyester may have a flexural strength of 80 MegaPascals (MPa) and a flexural modulus of 1 GigaPascals (GPa) and the polyethylene may have a flexural strength of 40 MPa and a flexural modulus of 0.7 GPa. Hence, in examples the second portion, for example the first layered structure may have a flexural strength approximately twice that of the fourth portion, and for example the second layered structure.

In some examples, the second material may additionally or alternatively have a reflectivity of less than 0.1 in the infrared spectrum, for example in a region of the electromagnetic spectrum with wavelengths in the range 0.7 micrometres (µm) to 1000 micrometres (µm). This relatively low reflectivity of the second material in the infrared spectrum may allow the second material, and thus the layer and/or layered structure or portion(s) thereof incorporating the second material, to have a relatively low infrared (IR) signature. For example, the second layered structure 130 in the example shown in Figure 1a, incorporating the second material in the second layer 165 may have a low IR signature allowing the second layered structure 130 to be relatively more difficult to detect by IR detection methods, for example if removed from the assembly 100 and discarded. Thus, in examples where the assembly 100 may be used in the field for affixing a charge, for example a contact charge, an explosively formed penetrator (EFP) charge, or a shaped charge such as a conical or linear shaped charge, to a target object via contacting the adhesive 150 with a surface of the charge and a surface of the target object, if the second layered structure 130, comprising the second material, is discarded in the field, it may be relatively difficult to detect the second layered structure 130 through IR detection.

In other examples, the second material may be sufficiently colourless and/or sufficiently transparent or translucent, such that the second material has a signature in the visible spectrum, for example in a region of the electromagnetic spectrum with wavelengths in the range 390 nanometres (nm) to 700 nanometres (nm), below an acceptable threshold. Thus, if a layered structure 110, 130 comprising the second material is discarded in the field it may be relatively difficult to detect the layered structure 110, 130 via visible detection.

In any of the examples described, one or more layers in a layered structure may be substantially impermeable or non-absorbent, for example have a volumetric fluid flow rate through the one or more layers below an acceptable threshold. This substantial impermeability or non-absorbency may be with respect to water, such that the layered structure, or assembly as a whole, may be resilient, for example shielding, to water ingress.

In any of the examples described, the adhesive may be formed, partially or completely, from at least one of a hydrogel, an acrylate polymer material (for example a poly aery late or acrylic material), and a rubber material (for example natural or synthetic rubber). The adhesive may comprise a fibrous structure, for example a mesh of filaments, which may be suspended in the adhesive. For example, the adhesive may comprise hydrogel with a mesh of polyester filaments suspended in the hydrogel in an example. Such a fibrous structure may give the adhesive preferential directions, for example different shear strengths along different axes of the adhesive. The fibrous structure may also provide structural support at variable temperatures, for example as the consistency of the adhesive changes due to variation in a surrounding temperature. In some examples, the adhesive may be formed by curing an adhesive material, such as the hydrogel, on the mesh. Such a hydrogel is for example available as Custom hydrogel supplied by Alliqua BioMedical, Inc., 1010 Stony Hill Road, Suite 200, Yardley, PA 19067, USA.

It should be appreciated that in the examples described previously and below, features of the second portion 120 and of the fourth portion 140, for example as shown on the right hand side of the assembly 100 in the examples of Figures 1a and 1b, may also be present at an opposite side of the assembly, for example at the left hand side of the assembly in respective portions 190, 195 as shown in Figures 1a and 1b. In examples, two longitudinal edges of the adhesive 150 may therefore be enclosed by the first and second layered structures 110, 130, as shown in cross section in Figures 1a and 1b. Hence, along one or both such edges of the adhesive, the second and fourth portions, and corresponding portions 190, 195, may each form a longitudinal seal along the respective edges.

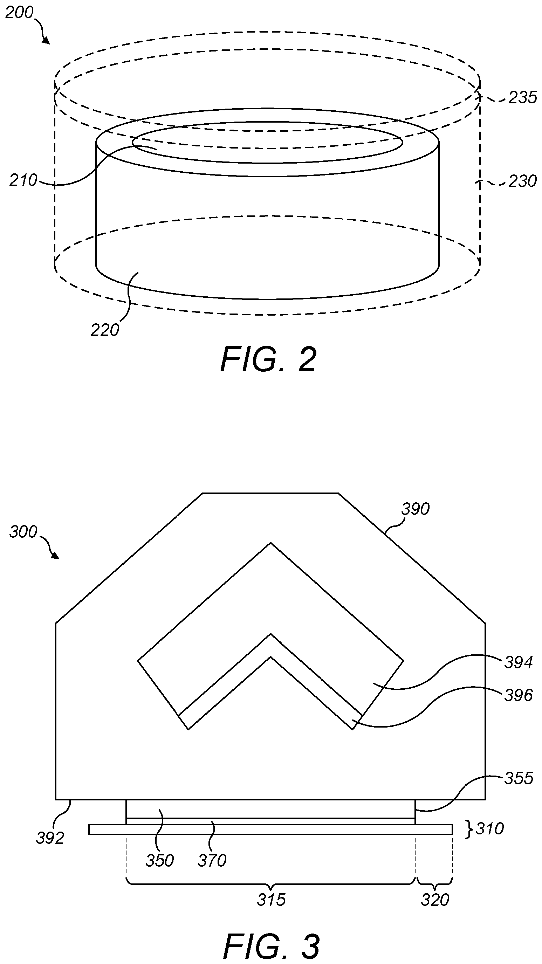

Figure 2 shows an example of an apparatus 200 comprising a holder 210 and an assembly 220 rolled on the holder 210. The assembly 220 may be an example assembly as herein described, for example the assembly 100 shown in Figure 1a or Figure 1b. The apparatus 200 also has a container 230 containing the assembly 220 rolled on the holder 210. In the example shown in Figure 2, the assembly 220 comprising layered structures may be arranged as an elongate strip that is rolled, for example turned over and over on itself. The holder 210 may be cylindrical or tubular in examples, as shown in Figure 2, which may assist in rolling the assembly 220. Rolling the assembly 220 on the holder 210 in this way may improve storage of the assembly 220 and may also improve usability of the assembly 220 by allowing the assembly 220 to be rolled off the holder 210 ready for use in the field. The assembly 220 may then be cut to a desired length after rolling off the holder 210, for example.

In some examples, the container 230 may enclose the assembly 220 rolled on the holder 210. In these examples, the assembly 220 may therefore be less exposed, or protected from, conditions of an external atmosphere i.e. an atmosphere about the container 230. For example, the external atmosphere may have a relatively high level of humidity, and the container 230 enclosing the assembly 220 may act to sufficiently seal the assembly 220 from the atmospheric humidity (by preventing water molecules passing from the external atmosphere to an internal atmosphere within the container 230, where the water molecules may affect the assembly 220).

The container 230 may include a covering 235, such as a lid, as in the example shown in Figure 2. The covering 235 may allow the assembly 200 to be placed in, and be enclosed by, the container 230. For example, the covering 235 may mate with the container 230, for example by a screw mechanism or a snap-fit mechanism. Hence the container may be openable and closable. The covering 235 may also comprise a seal, for example made from rubber or a polymer seal (such as polyethylene), which may act to sufficiently seal the assembly 220 from the external atmosphere when enclosed in the container 230.

The enclosing of the assembly 220 by the container 230 may be considered a secondary sealing of the adhesive comprised within the assembly 220. This secondary sealing of the adhesive from external conditions may allow for a longer lifetime, in other words period of usability, of the adhesive. For example, in cases where the adhesive comprises a hydrogel, the presence of water in contact with the hydrogel (for example via the atmosphere or in liquid form) may negatively affect the hydrogel and may decrease its effectiveness as an adhesive.

The assembly 220 may therefore be stored in the container 230, to prolong the lifetime of the adhesive, long-term (for example for four to five years for a hydrogel adhesive). Once removed from the container 230, the assembly 220 may exhibit climatic resilience when portions of the layered structures in the assembly 220 are in a sealed configuration, as described in examples. Thus, after removal from the container 230, the assembly 220 may still prolong the lifetime of the adhesive. For example, for a hydrogel adhesive, the adhesive 220 may have a lifetime of six months outside of the container 230. This primary and secondary sealing of the adhesive by the assembly 220 and the container 230 allows, in a use example, for the adhesive to be stored and transported in the container 230 to a first location. At the first location, the assembly 220 may be removed from the container 230. The assembly 220 may be primed, for example by removing a layered structure of the assembly 220 and affixing the assembly less the layered structure to a charge, via contacting the adhesive with a surface of the charge, at a second location (which may be the same location as the first location). At a third location, which may be the same as the second location, the other layered structure of the assembly 220 may be removed, and the charge may be applied to a target object by contacting the adhesive with a surface of the target object.

In further examples the assembly may be rolled on itself, without a holder.

A method of affixing an adhesive to a charge according to examples is now described, with reference to Figure 3, the method comprising providing an assembly 300. The assembly may be an implementation of an assembly described herein according to an example, for example the assembly 100 shown in Figure 1a or Figure 1b. The assembly 300 comprises a first layered structure 310. The first layered structure 310 has a first portion 315 and a second portion 320, the second portion 320 comprising a first material. The assembly also comprises a second layered structure (not shown in Figure 3) comprising a third portion and a fourth portion, the fourth portion comprising a second material. There is an attractive force between the first material and the second material. An adhesive 350 lies between the first portion 315 of the first layered structure 310 and the third portion of the second layered structure. The second portion 320 and the fourth portion each overhang an edge 355 of the adhesive 350. The edge 355 of the adhesive 350 may be considered to correspond with the boundary between the first portion 315 and the second portion 320, and between the third portion and the fourth portion. The second portion 320 and the fourth portion are configurable to a sealed configuration with the second portion 320 and the fourth portion held in contact with each other by the attractive force between the first material and the second material.

In examples, the attractive force is an electrostatic attractive force. The description above regarding the electrostatic attractive force between the first and second materials also applies in such examples. In certain cases, the first material has a first charge affinity value and the second material has a second charge affinity value different from the first charge affinity value by at least 20 nC/J, 30 nC/J, 40 nC/J or 50 nC/J.

In some examples, the method comprises removing the second layered structure to expose a surface of the adhesive. For example, the second layered structure may be removed by lifting the second layered structure at the fourth portion, overhanging the edge 355 of the adhesive 350, to overcome the attractive force between the second portion 320 and the fourth portion. In some examples, the first portion 315 may comprise a third layer 370 in contact with the adhesive 350 and comprising a first release agent, as shown in Figure 3. In the example shown in Figure 3, the third layer 370 is substantially absent from the second portion 320. Additionally or alternatively, the third portion may similarly comprise a fourth layer in contact with the adhesive 350, and comprising a second release agent (not shown in Figure 3). In some examples, the fourth layer is substantially absent from the fourth portion. Thus, when removing the second layered structure, the entire second layered structure, including the fourth layer comprising the second release agent, may be removed in some examples. After removing the second layered structure, a surface of the adhesive 350 is exposed, for example may at least partially no longer be covered.

In some cases, the method comprises applying the surface of the adhesive 350 to a charge 390, for example to a surface 392 of the charge 390, as in the example shown in Figure 3. The charge 390 may be a contact charge, an EFP charge, or a shaped charge such as conical or linear shaped charge, for example. As shown in Figure 3, the assembly 300 less the second layered structure may be affixed to the charge 390 by the adhesive 350. In the example shown, the linear shaped charge 390 comprises an explosive element 394 and a liner 396. The surface 392 of the linear shaped charge 390 may be a face for application to a target object. It is noted that in Figure 3 the adhesive has been applied to less than all of a surface of the charge which faces a target object. In further examples, it is envisaged that the adhesive is sized to cover more or less of the surface, for example substantially (e.g. greater than 95%) of the surface, and may even wrap around to cover side surfaces of the charge.

Thus, in the example configuration shown in Figure 3, the first layered structure 310 may also be removed, for example following affixing the assembly 300 less the second layered structure to the surface 392 of the charge 390. When removing the first layered structure 310, the entire first layered structure 310, including the third layer 370 comprising the first release agent in examples where the third layer 370 is present, may be removed in some examples. After removing the first layered structure 310, the adhesive 350 may be exposed, for example may at least partially no longer be covered. The charge 390 may be affixed to a target object by contacting the adhesive 350 with a surface of the target object in particular examples. Thus, the assembly 300 may be used for breaching a target, for example a wall, with the charge 390. For example, the adhesive 350 may be affixed to the charge 390 according to the methods described, and the charge 390 may be affixed to the target by the adhesive 350. The charge 390 may then be detonated, when affixed to the target, in order to breach the target.

In some embodiments described above, linear shaped charges were referred to, for example as being an example of a charge 390 shown in Figure 3. A linear shaped charge, for example that of Figure 3, may comprise an explosive element (e.g. 394), a liner (e.g. 396), and in some examples a surface or face (e.g. 392) for application to a target object, with the liner arranged for projection towards the face when the explosive element is detonated. For example, as will be readily appreciated by the skilled person, a liner may be, before detonation, a longitudinal element having a V-shaped cross section and formed for example of copper or a material comprising copper or another suitable metal. The apex of the V-shape is located further from the target object than the two sides of the V-shape.

In some embodiments, the liner may be a metallic layer which extends away from a side of the charge to be applied to a target object, to surround, when viewed in cross-section, the explosive material of the linear shaped charge. Such a liner may have a V-shaped cross section.

Linear shaped charges may comprise a space between the liner and the face, the liner being arranged for projection through the space after the explosive element (located on a side of the liner furthest from the target object) is detonated. At least part of the space may be filled with a filling material. Linear shaped charges may also comprise a casing surrounding at least part of the explosive element. The casing and/or filling material may comprise foam, for example low density polyethylene (LDPE) foam. The casing and the filling material may be integrally formed. A linear shaped charge may be flexible along a longitudinal axis. This allows the target object to be cut with a curved shape when the linear shaped charge is detonated. In examples, flexible typically means that the linear shaped charge may be bent, twisted, or otherwise deformed, for example along or relative to a longitudinal axis of the linear shaped charge, for example by a human with their hands without any tools. A linear shaped charge may have elastic properties, so that the linear shaped charge at least partly returns to a pre-deformed configuration. In other embodiments, the linear shaped charge may have plastic properties, so that for example the linear shaped charge at least partly retains a deformed configuration after being deformed. In some embodiments, a linear shaped charge may be similar to a linear shaped charge described above, but which is substantially non-flexible, and therefore not for example deformable by a human with their hands without any tools. Such examples may include a linear shaped charge with a rigid copper or other metal liner.

Examples described above refer to the sealed configuration providing a barrier between the adhesive and atmospheric humidity. It is envisaged in further examples that the second and/or fourth portion may least partly absorb UV radiation. For example, a material of the second and/or fourth portion, such as the first material and/or the second material, may be configured to absorb one or more wavelengths in the UV radiation spectrum which the adhesive is susceptible to deterioration from. Thus, in some examples, the second and/or fourth portion may act as a barrier against a majority (for example 95% or more) of the UV wavelengths which the adhesive is susceptible to. In other examples such portions may absorb substantially all (for example 95% or more of wavelengths in the entire UV spectrum). Hence, in the sealed configuration, the adhesive may be shielded from UV radiation, and its lifetime may be prolonged. It is similarly conceived that the first layered structure and/or the second layered structure may be configured to provide such UV radiation shielding to upper and lower sides of the adhesive in contact with a release agent. For example, the first layer and/or the second layer may be formed of a material providing such UV radiation shielding properties.

Further, although humidity has been described in examples above, the sealed configuration may also provide a barrier to exposure of the adhesive to other atmospheric contaminants, for example particulates (e.g. dust) or dispersed chemicals such as solvents which may deteriorate the adhesive's effectiveness and/or which might in turn, with the adhesive applied to the explosive material, deteriorate an explosive material of the charge. Hence, materials chosen for the assembly may be carefully selected to be sufficiently inert for an explosive material of a charge, and may therefore be free from a dye or solvent.

In further examples, the first layered structure and the second layered structure may be different sections of a single layered structure which is configurable, for example by folding or rolling, such that one such section is positioned over another such section. Thus, with the adhesive or a non-adhesive material deposited on one surface 490 (e.g. an upper surface of a first section) of the single layered structure, another surface 492 (e.g. a lower surface of a second section) may contact the adhesive also. It is to be appreciated that, as the skilled person would understand, features of the first layered structure and/or of the second layered structure described previously may apply here also in respect of the first and second sections of the single layered structure; corresponding descriptions apply here too. For example, the single layered structure may comprise at least the layers of the second layered structure described earlier. The fourth portion may correspond to a portion of the first section and the second portion may correspond to a portion of the second section, which portions of the first and second sections are, similar to the second portion and fourth portion described earlier, configurable to a sealed configuration in which they are held in contact with each other by the attractive force.

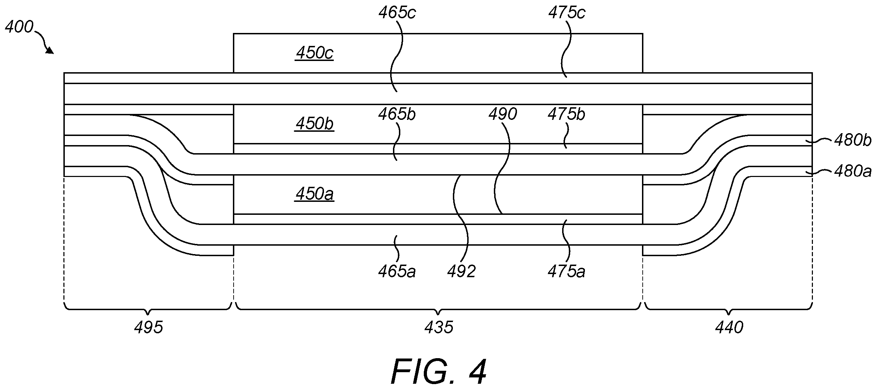

Figure 4 illustrates schematically an example of the first section and a second section overlapping each other, together with a third section. Features described previously are labelled in Figure 4 with the same reference numerals as in Figure 1a, but prefixed by 400 rather than 100. Such a configuration as shown may be provided if the assembly is rolled around a holder, similar to the examples described previously with reference to Figure 2. Reference numerals for the first section are suffixed with a, reference numerals for the second section are suffixed with b, and reference numerals for the third section are suffixed with c.

As shown in Figure 4, and as would be appreciated by the skilled person, more than two sections of the single layered structure may be configured to overlap each other, for example in a roll of the assembly. Thus, for a first section, the fourth portion is configurable to be held in contact with the second portion of the second section. In turn, the second portion of the second section may also be considered the fourth portion configurable to be held in contact with the second portion of a third section.

With each fourth portion being configured, for example bent, to contact a respective second portion of the overlapping section, a width of each fourth portion may need to be greater than two or more thicknesses of the adhesive, so that the appropriate fourth and second portions can contact each other to form the sealed configuration.

In examples such as that of Figure 4, it will be appreciated that a single layered structure may be used instead of two separate layered structures 110, 130 as illustrated for example in Figure 1a. The phrase single layered structure can be considered as one structure comprising one or more layers.

With the second portion of the second section in contact with the fourth portion of the first section, it may be necessary to have a coating or other layer of material with appropriate properties to enable the attraction between second and fourth portions. For example, an underside of the second layer 465 may have a coating or other layer 480 of the first material. In some examples such a coating may be applied as a paint or other fluid application. In other examples such a coating is another layer with an extent at least within the second portion but which may extend across the extent of the whole third layer 465, for example as a laminated layer. In other examples, instead of the coating or layer being on the underside of the second layer 465, it may instead be on an upper-side of the second layer.

In further examples than those shown in Figure 4, an underside of the first and second layered structures has a layer comprising a release agent, similar to the layer labelled 475 shown on an upper side of the first and second layered structures, for contact with the adhesive or non-adhesive material. In the latter case, the layer comprising the release agent may as well as being releasable have a suitable adhesion to the non-adhesive material. In examples where this layer extends into the second and fourth portions, the coating or other layer 480 may be applied thereon.

It should be appreciated that in the examples described in relation to Figure 4, features of the second portion and of the fourth portion, for example as shown on the right hand side of the assembly 400, may also be present at an opposite side of the assembly, for example at the left hand side of the assembly in respective portions such as that labelled 495 as shown in Figure 4. In examples, two longitudinal edges of the adhesive 450 may therefore be enclosed by two sections of the second layered structure as shown in cross section in Figure 4. Hence, along one or both such edges of the adhesive, the second and fourth portions, and corresponding portions on the left hand side as shown, may each form a longitudinal seal along the respective edges.

It is to be understood that any feature described in relation to any one embodiment may be used alone, or in combination with other features described and may also be used in combination with one or more features of any other of the embodiments, or any combination of any other of the embodiments. Furthermore, equivalents and modifications not described above may also be employed without departing from the scope of the accompanying claims.

## Claims

1. An assembly (100) comprising:
a first layered structure (110) comprising a first portion (115) and a second portion (120), the second portion comprising a first material;
a second layered structure comprising a third portion (130) and a fourth portion (140), the fourth portion comprising a second material;
an adhesive between the first portion and the third portion,
wherein the second portion and the fourth portion each overhang an edge of the adhesive (150) and are configured to a sealed configuration with the second portion and the fourth portion held in contact with each other by an attractive force between the first material and the second material.

2. An assembly according to claim 1, wherein the attractive force is an electrostatic attractive force.

3. An assembly according to claim 1 or 2, wherein the first material has a first charge affinity value and the second material has a second charge affinity value different from the first charge affinity value by at least 20 nC/J; or
wherein a width of the second portion is greater than or equal to a thickness of the adhesive at the edge of the adhesive.

4. An assembly according to any preceding claim,
the first layered structure comprising a first layer comprising the first material, the second portion at least partly comprising the first layer,
wherein optionally the first portion partly comprises the first layer.

5. An assembly according to any preceding claim,
the second layered structure comprising a second layer comprising the second material, the fourth portion at least partly comprising the second layer,
wherein optionally the third portion partly comprises the second layer.

6. An assembly according to any preceding claim, wherein:
the first portion comprises a third layer in contact with the adhesive and comprising a first release agent,
wherein optionally the third layer is substantially absent from the second portion.

7. An assembly according to any preceding claim, wherein the third portion comprises a fourth layer in contact with the adhesive and comprising a second release agent,
wherein optionally the fourth layer is substantially absent from the fourth portion.

8. An assembly according to any of claims 1 to 3, or any of claims 1 to 3 and claim 6 or 7,
the first portion and the second portion together comprising a first layer, and
the second portion at least partly comprising a fifth layer comprising the first material,
wherein optionally the fifth layer is substantially absent from the first portion; or
wherein optionally
the third portion and the fourth portion together comprising a second layer, and
the fourth portion at least partly comprising a sixth layer comprising the second material, wherein optionally the sixth layer is substantially absent from the third portion.

9. An assembly according to claims 6 and 7, wherein the first release agent and the second release agent each have a respective surface energy density value so that the first layered structure and the second layered structure are each releasable from the adhesive by a human user,
wherein optionally at least one of the first release agent or the second release agent comprises at least one of: silicone; or polyethylene.

10. An assembly according to any preceding claim, wherein the fourth portion is more flexible than the second portion; or
wherein the second portion has a larger flexural modulus value than the fourth portion; or
wherein the second material has a reflectivity of less than 0.1 in the infrared spectrum 0.7 µm to 1000 µm; or
wherein the first material comprises a first polymer material and the second material comprises a second polymer material, wherein optionally the first polymer material comprises a polyester and wherein optionally the second polymer material comprises a polyethylene.

11. An assembly according to any preceding claim wherein the adhesive comprises at least one of: a hydrogel; an acrylate polymer material; a rubber material; or a self-amalgamating material.

12. An assembly according to any preceding claim, wherein the first layered structure is a first section of a single layered structure, and the second layered structure is a second section of the single layered structure, the single layered structure configurable to position the first layered structure over the second layered structure such that the second portion and the fourth portion are configurable to the sealed configuration.

13. An apparatus comprising:
a holder (210);
the assembly (220) according to any of claims 1 to 12 rolled on the holder; and
a container (230) containing the assembly rolled on the holder,
wherein optionally the container substantially encloses the assembly rolled on the holder.

14. A method of affixing an adhesive to a charge, the method comprising:
providing an assembly (100) comprising:
a first layered structure (110) comprising a first portion (115) and a second portion (120), the second portion comprising a first material;
a second layered structure (130) comprising a third portion (135) and a fourth portion (140), the fourth portion comprising a second material; and
an adhesive between the first portion and the third portion,
wherein the second portion and the fourth portion each overhang an edge of the adhesive (150) and are configured to a sealed configuration with the second portion and the fourth portion held in contact with each other by an attractive force between the first material and the second material;
removing the second layered structure to expose a surface of the adhesive; and
applying the surface of the adhesive to the charge.

15. A method according to claim 14, wherein the attractive force is an electrostatic attractive force; or
wherein the first material has a first charge affinity value and the second material has a second charge affinity value different from the first charge affinity value by at least 20 nC/J; or
wherein the first layered structure is a first section of a single layered structure, and the second layered structure is a second section of the single layered structure, the single layered structure configurable to position the first layered structure over the second layered structure such that the second portion and the fourth portion are configurable to the sealed configuration.

## Patentansprüche

1. Anordnung (100), die Folgendes umfasst:
eine erste geschichtete Struktur (110), die einen ersten Abschnitt (115) und einen zweiten Abschnitt (120) umfasst, wobei der zweite Abschnitt ein erstes Material umfasst;
eine zweite geschichtete Struktur, die einen dritten Abschnitt (130) und einen vierten Abschnitt (140) umfasst, wobei der vierte Abschnitt ein zweites Material umfasst;
einen Klebstoff zwischen dem ersten Abschnitt und dem dritten Abschnitt,
wobei der zweite Abschnitt und der vierte Abschnitt jeweils über eine Kante des Klebstoffs (150) hervorstehen und zu einer abgedichteten Konfiguration konfiguriert sind, wobei der zweite Abschnitt und der vierte Abschnitt durch eine Anziehungskraft zwischen dem ersten Material und dem zweiten Material miteinander in Berührung gehalten werden.

2. Anordnung nach Anspruch 1, wobei die Anziehungskraft eine elektrostatische Anziehungskraft ist.

3. Anordnung nach Anspruch 1 oder 2, wobei das erste Material einen ersten Ladungsaffinitätswert aufweist und das zweite Material einen zweiten Ladungsaffinitätswert aufweist, der sich von dem ersten Ladungsaffinitätswert um mindestens 20 nC/J unterscheidet; oder
wobei eine Breite des zweiten Abschnitts größer als oder gleich einer Dicke des Klebstoffs an der Kante des Klebstoffs ist.

4. Anordnung nach einem der vorhergehenden Ansprüche, wobei die erste geschichtete Struktur eine erste Schicht umfasst, die das erste Material umfasst, wobei der zweite Abschnitt die erste Schicht mindestens teilweise umfasst, wobei optional der erste Abschnitt die erste Schicht teilweise umfasst.

5. Anordnung nach einem der vorhergehenden Ansprüche, wobei die zweite geschichtete Struktur eine zweite Schicht umfasst, die das zweite Material umfasst, wobei der vierte Abschnitt die zweite Schicht mindestens teilweise umfasst, wobei optional der dritte Abschnitt die zweite Schicht teilweise umfasst.

6. Anordnung nach einem der vorhergehenden Ansprüche, wobei:
der erste Abschnitt eine dritte Schicht umfasst, die mit dem Klebstoff in Berührung steht und die ein erstes Trennmittel umfasst, wobei optional die dritte Schicht in dem zweiten Abschnitt im Wesentlichen nicht vorhanden ist.

7. Anordnung nach einem der vorhergehenden Ansprüche, wobei der dritte Abschnitt eine vierte Schicht umfasst, die mit dem Klebstoff in Berührung steht und die ein zweites Trennmittel umfasst, wobei optional die vierte Schicht in dem vierten Abschnitt im Wesentlichen nicht vorhanden ist.

8. Anordnung nach einem der Ansprüche 1 bis 3 oder nach einem der Ansprüche 1 bis 3 und 6 oder 7, wobei
der erste Abschnitt und der zweite Abschnitt zusammen eine erste Schicht umfassen und der zweite Abschnitt eine fünfte Schicht mindestens teilweise umfasst, die das erste Material umfasst,
wobei optional die fünfte Schicht in dem ersten Abschnitt im Wesentlichen nicht vorhanden ist; oder
wobei optional
der dritte Abschnitt und der vierte Abschnitt zusammen eine zweite Schicht umfassen, und
der vierte Abschnitt eine sechste Schicht mindestens teilweise umfasst, die das zweite Material umfasst, wobei optional die sechste Schicht in dem dritten Abschnitt im Wesentlichen nicht vorhanden ist.

9. Anordnung nach Anspruch 6 und 7, wobei das erste Trennmittel und das zweite Trennmittel jeweils einen jeweiligen Oberflächenenergiedichtewert so aufweisen, dass die erste geschichtete Strukturund die zweite geschichtete Struktur durch einen menschlichen Benutzer jeweils von dem Klebstoff trennbar sind, wobei optional das erste Trennmittel und/oder das zweite Trennmittel Folgendes umfassen: Silikon; und/oder Polyethylen.

10. Anordnung nach einem der vorhergehenden Ansprüche, wobei der vierte Abschnitt biegsamer als der zweite Abschnitt ist; oder
wobei der zweite Abschnitt einen größeren Biegemodulwert als der vierte Abschnitt aufweist; oder
wobei das zweite Material ein Reflexionsvermögen von weniger als 0,1 in dem Infrarotspektrum 0,7 µm bis 1000 µm aufweist; oder
wobei das erste Material ein erstes Polymermaterial umfasst und das zweite Material ein zweites Polymermaterial umfasst, wobei optional das erste Polymermaterial einen Polyester umfasst und wobei optional das zweite Polymermaterial ein Polyethylen umfasst.

11. Anordnung nach einem der vorhergehenden Ansprüche, wobei der Klebstoff Folgendes umfasst: ein Hydrogel; ein Acrylatpolymermaterial; ein Gummimaterial; und/oder ein selbstverschmelzendes Material.

12. Anordnung nach einem der vorhergehenden Ansprüche, wobei die erste geschichtete Struktur ein erster Bereich einer einschichtigen Struktur ist und die zweite geschichtete Struktur ein zweiter Bereich der einschichtigen Struktur ist, wobei die einschichtige Struktur konfigurierbar ist, um die erste geschichtete Struktur über der zweiten geschichteten Struktur derart zu positionieren, dass der zweite Abschnitt und der vierte Abschnitt zu der abgedichteten Konfiguration konfigurierbar sind.

13. Vorrichtung, die Folgendes umfasst:
eine Halterung (210);
wobei die Anordnung (220) nach einem der Ansprüche 1 bis 12 auf der Halterung gerollt ist; und
einen Behälter (230), der die Anordnung enthält, die auf der Halterung gerollt ist,
wobei optional der Behälter die Anordnung, die auf der Halterung gerollt ist, im Wesentlichen umschließt.

14. Verfahren zum Befestigen eines Klebstoffs an einer Ladung, wobei das Verfahren Folgendes umfasst:
Bereitstellen einer Anordnung (100), die Folgendes umfasst:
eine erste geschichtete Struktur (110), die einen ersten Abschnitt (115) und einen zweiten Abschnitt (120) umfasst, wobei der zweite Abschnitt ein erstes Material umfasst;
eine zweite geschichtete Struktur (130), die einen dritten Abschnitt (135) und einen vierten Abschnitt (140) umfasst, wobei der vierte Abschnitt ein zweites Material umfasst; und
einen Klebstoff zwischen dem ersten Abschnitt und dem dritten Abschnitt,
wobei der zweite Abschnitt und der vierte Abschnitt jeweils über eine Kante des Klebstoffs (150) hervorstehen und zu einer abgedichteten Konfiguration konfiguriert sind, wobei der zweite Abschnitt und der vierte Abschnitt durch eine Anziehungskraft zwischen dem ersten Material und dem zweiten Material miteinander in Berührung gehalten werden;
Entfernen der zweiten geschichteten Struktur, um eine Oberfläche des Klebstoffs freizulegen; und
Aufbringen der Oberfläche des Klebstoffs auf die Ladung.

15. Verfahren nach Anspruch 14, wobei die Anziehungskraft eine elektrostatische Anziehungskraft ist; oder
wobei das erste Material einen ersten Ladungsaffinitätswert aufweist und das zweite Material einen zweiten Ladungsaffinitätswert aufweist, der sich von dem ersten Ladungsaffinitätswert um mindestens 20 nC/J unterscheidet; oder
wobei die erste geschichtete Struktur ein erster Bereich einer einschichtigen Struktur ist und die zweite geschichtete Struktur ein zweiter Bereich der einschichtigen Struktur ist, wobei die einschichtige Struktur konfigurierbar ist, um die erste geschichtete Struktur über der zweiten geschichteten Struktur derart zu positionieren, dass der zweite Abschnitt und der vierte Abschnitt zu der abgedichteten Konfiguration konfigurierbar sind.

## Revendications

1. Ensemble (100) comprenant :
une première structure en couches (110) comprenant une première partie (115) et une deuxième partie (120), la deuxième partie comprenant un premier matériau ;
une seconde structure en couches comprenant une troisième partie (130) et une quatrième partie (140), la quatrième partie comprenant un second matériau ;
un adhésif entre la première partie et la troisième partie,
dans lequel la deuxième partie et la quatrième partie surplombent chacune un bord de l'adhésif (150) et sont conçues pour adopter une configuration étanche avec la deuxième partie et la quatrième partie maintenues en contact l'une avec l'autre par une force d'attraction entre le premier matériau et le second matériau.

2. Ensemble selon la revendication 1, dans lequel la force d'attraction est une force d'attraction électrostatique.

3. Ensemble selon la revendication 1 ou 2, dans lequel le premier matériau présente une première valeur d'affinité de charge et le second matériau présente une seconde valeur d'affinité de charge différente de la première valeur d'affinité de charge d'au moins 20 nC/J ; ou
dans lequel une largeur de la deuxième partie est supérieure ou égale à une épaisseur de l'adhésif au bord de l'adhésif.

4. Ensemble selon l'une quelconque des revendications précédentes,
la première structure en couches comprenant une première couche comprenant le premier matériau, la deuxième partie comprenant au moins en partie la première couche,
dans lequel éventuellement la première partie comprend en partie la première couche.

5. Ensemble selon l'une quelconque des revendications précédentes,
la seconde structure en couches comprenant une deuxième couche comprenant le second matériau, la quatrième partie comprenant au moins en partie la deuxième couche,
dans lequel éventuellement la troisième partie comprend en partie la deuxième couche.

6. Ensemble selon l'une quelconque des revendications précédentes, dans lequel :
la première partie comprend une troisième couche en contact avec l'adhésif et comprenant un premier agent anti-adhésif,
dans lequel éventuellement la troisième couche est sensiblement absente de la deuxième partie.

7. Ensemble selon l'une quelconque des revendications précédentes, dans lequel la troisième partie comprend une quatrième couche en contact avec l'adhésif et comprenant un second agent anti-adhésif,
dans lequel éventuellement la quatrième couche est sensiblement absente de la quatrième partie.

8. Ensemble selon l'une quelconque des revendications 1 à 3, ou l'une quelconque des revendications 1 à 3 et la revendication 6 ou 7,
la première partie et la deuxième partie comprenant ensemble une première couche, et
la deuxième partie comprenant au moins en partie une cinquième couche comprenant le premier matériau,
dans lequel éventuellement la cinquième couche est sensiblement absente de la première partie ; ou
dans lequel éventuellement
la troisième partie et la quatrième partie comprennent ensemble une deuxième couche, et
la quatrième partie comprenant au moins en partie une sixième couche comprenant le second matériau, dans lequel éventuellement la sixième couche est sensiblement absente de la troisième partie.

9. Ensemble selon les revendications 6 et 7,
dans lequel le premier agent anti-adhésif et le second agent anti-adhésif présentent chacun une valeur de densité d'énergie de surface respective de sorte que la première structure en couches et la seconde structure en couches peuvent chacune être libérées de l'adhésif par un utilisateur humain,
dans lequel éventuellement le premier agent anti-adhésif et/ou le second agent anti-adhésif comprend : du silicone ; et/ou du polyéthylène.

10. Ensemble selon l'une quelconque des revendications précédentes, dans lequel la quatrième partie est plus flexible que la deuxième partie ; ou
dans lequel la deuxième partie présente une valeur de module de flexion supérieure à celle de la quatrième partie ; ou
dans lequel le second matériau présente une réflectivité inférieure à 0,1 dans le spectre infrarouge de 0,7 à 1000 µm ; ou
dans lequel le premier matériau comprend un premier matériau polymère et le second matériau comprend un second matériau polymère, dans lequel éventuellement le premier matériau polymère comprend un polyester, et dans lequel éventuellement le second matériau polymère comprend un polyéthylène.

11. Ensemble selon l'une quelconque des revendications précédentes, dans lequel l'adhésif comprend : un hydrogel ; et/ou un matériau polymère acrylate ; et/ou un matériau en caoutchouc ; et/ou un matériau auto-amalgamant.

12. Ensemble selon l'une quelconque des revendications précédentes, dans lequel la première structure en couches est une première section d'une structure en couches unique, et la seconde structure en couches est une seconde section de la structure en couches unique, la structure en couches unique pouvant être conçue pour positionner la première structure en couches sur la seconde structure en couches de telle sorte que la deuxième partie et la quatrième partie puissent adopter une configuration étanche.

13. Appareil comprenant :
un support (210) ;
l'ensemble (220) selon l'une quelconque des revendications 1 à 12 roulé sur le support ; et
un contenant (230) contenant l'ensemble roulé sur le support,
dans lequel éventuellement le contenant renferme sensiblement l'ensemble roulé sur le support.

14. Procédé de fixation d'un adhésif sur une charge, le procédé comprenant :
la fourniture d'un ensemble (100) comprenant :
une première structure en couches (110) comprenant une première partie (115) et une deuxième partie (120), la deuxième partie comprenant un premier matériau ;
une seconde structure en couches (130) comprenant une troisième partie (135) et une quatrième partie (140), la quatrième partie comprenant un second matériau ; et
un adhésif entre la première partie et la troisième partie,
dans lequel la deuxième partie et la quatrième partie surplombent chacune un bord de l'adhésif (150) et sont conçues pour adopter une configuration étanche avec la deuxième partie et la quatrième partie maintenues en contact l'une avec l'autre par une force d'attraction entre le premier matériau et le second matériau ;
l'enlèvement de la seconde structure en couches pour exposer une surface de l'adhésif ; et
l'application de la surface de l'adhésif sur la charge.

15. Procédé selon la revendication 14, dans lequel la force d'attraction est une force d'attraction électrostatique ; ou
dans lequel le premier matériau présente une première valeur d'affinité de charge et le second matériau présente une seconde valeur d'affinité de charge différente de la première valeur d'affinité de charge d'au moins 20 nC/J ; ou
dans lequel la première structure en couches est une première section d'une structure en couches unique, et la seconde structure en couches est une seconde section de la structure en couches unique, la structure en couches unique pouvant être conçue pour positionner la première structure en couches sur la seconde structure en couches de telle sorte que la deuxième partie et la quatrième partie puissent adopter une configuration étanche.
